# EUROPEAN PATENT SPECIFICATION

(11) **EP 1 505 776 B1**
(45) Date of publication and mention of the grant of the patent: **28.11.2007**
(21) Application number: 04017698.4
(22) Date of filing: 27.07.2004
(51) Int. Cl.: H04L 12/413

(54) **Bus interface for interconnection of cards in mac-equipped electronic equipment**
Busschnittstelle für die Verbindung von Karten in einer mit einem MAC ausgestalteten elektronischen Vorrichtung
Interface de bus pour interconnexion de cartes dans un dispositif électronique avec MAC

(30) Priority: 01.08.2003 IT mi20031588
(43) Date of publication of application: 09.02.2005
(73) Proprietor: Selex Communications S.P.A., 16151 Genova (IT)
(72) Inventor: Cravino, Fabio, 16156 Genova (IT)
(74) Representative: Deambrogi, Edgardo

(56) References cited:
- US-A- 5 963 539
- US-A- 5 974 051
- US-B1- 6 487 214

## Description

The present invention relates to a bus interface device, a bus protocol and a bus for interconnection of cards in a piece of electronic equipment.

Much communications equipment has an internal structure based on cards which, to function, need to exchange information with each other for control and shared processing of signals in real time. A high-speed internal "bus" is a normal way of implementing communication between cards.

Bus protocols can be the proprietary type or the standard type. The present general approach is to use bus protocols defined by standard-issuing agencies. For example, standard protocols based on Internet Protocol (IP) find ever-greater favor and the protocol "10 Base-2" based on the specifications IEEE-802.3 is selected as reference point for high-level interoperability.

This protocol was originally conceived for Local Area Network (LAN) applications, i.e. for the realization of local networks connecting equipment in the same site, and can also be used for connecting cards, typically internal construction blocks of a piece of electronic equipment.

The typical implementation of such protocols is based on Large Scale Integration (LSI) industrial components implementing LAN standards through a Media Access Controller (MAC) for control of the flow and a transceiver as physical interface with the bus.

For its operation, a conventional MAC exchanges with the transceiver the clock TX, data TX, Request For Transmission (RENA), Transmission Enable (TENA), clock RX, data RX, and

Collision Status On Bus (CLSN) signals. The collision status on the bus information makes each unit capable of knowing if a transmission phase is possible on the bus, detecting that no other unit on the bus is transmitting. The LSI transceiver converts the signals from and to the MAC in suitable bus signals. As the standard bus protocol was devised for connections between separate machines, i.e. for buses outside the equipment, conversion is relatively sophisticated for the purpose of reducing the number of connection wires and permitting relatively long distances between equipment with acceptable error rates.

For example, US 6,487,214 discloses a method and apparatus for implementing an Ethernet protocol using three wires (2-wire complementary data line and 1-wire clock.

The known realization has however various disadvantages when used for implementing internal busses. Indeed, for the latter to function regularly, the least separation between two transceivers must be at least 0.5 meters, which is quite difficult to achieve in internal connections of medium and small equipment. In addition, the typical consumption of electrical power of prior art LSI transceivers is relatively high (around 1 W per unit). This consumption is acceptable for use of transceivers in different equipment but is decidedly excessive for application in internal cards in a single piece of equipment where a piece of equipment with 20 cards should have a consumption of 20 W only for operation of the bus. Lastly, there are various difficulties in integrating the standard functions of transceivers in Field Programmable Gate Array (FPGA) components that are often used for realization of the circuitry on the cards of the communications equipment.

The general purpose of the present invention is to remedy the above mentioned shortcomings by making available a bus structure with interconnection transceivers on the bus allowing easy realization, low consumption and satisfactory operation in intercard communication within a piece of equipment.

In view of this purpose it is sought to provide in accordance with the present invention a bus interface device for interconnection of a plurality of cards in a piece of electronic equipment and comprising for each card a MAC with TENA, TX, CK, RENA, RX and CLSN bus signals and a transceiver between the MAC and at least one interconnection bus between the cards and characterized in that the interconnection bus comprises a clock line CK, a data line, a TENA signaling line for signaling enablement for transmission by a card connected to the bus and a CLSN signaling line for signaling the collision event on the bus with the transceiver connecting the TENA line of the bus to the TENA and RENA lines of the MAC, the TX and RX lines of the MAC to the DATA line of the bus, the CK line of the MAC to the CK line of the bus, the CLSN line of the MAC to the CLSN line of the bus with the TENA and TX lines of the MAC being connected to the bus with an open-collector connection and the transceiver comprising in addition a collision detector which, when the TENA line of the MAC signals enablement of the card for transmission, compares the TX line output from the MAC and the RX line input to the MAC and sends out a collision signal on the CLSN line of the bus if it detects a discordance between the compared lines.

Again in accordance with the present invention it is sought to realize an interconnection bus for a plurality of cards in a piece of electronic equipment comprising a CK clock line, a data line, a TENA signaling line for signaling enablement for transmission by a card connected to the bus and a CLSN signaling line for signaling the collision event on the bus with the TENA and CLSN data lines being terminated and supplying an open-collector connection of corresponding outputs of the cards connected to the bus.

In accordance with another aspect of the present invention it is sought to realize an interconnection bus protocol for a plurality of cards in a piece of electronic equipment starting from TENA, TX, CKTX, RENA, RX and CLSN signals of a MAC on each card and comprising a CK clock signal connected to the CKTX signal of the MAC, a data signal connected to the TX and RX signals of the MAC and a TENA signal connected to the TENA signal of the MAC to signal enablement of transmission by a card connected to the bus and a CLSN signal for signaling the collision event on the bus with the DATA, TENA and CLSN signals being sent on the open collector bus and there being provided a collision detection claiming the CLSN line of the bus when discordance is detected between the data sent by a card on the data line of the bus and the data which the same card receives simultaneously from the bus on the same data line of the bus.

Lastly, a piece of equipment equipped with cards and interconnection buses in accordance with the present invention is claimed.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a block diagram of the interface zone between a microprocessor card equipped with a MAC and a bus in accordance with the present invention;
FIG 2 shows a time diagram of signals belonging to the diagram of FIG 1;
FIG 3 shows a view in greater detail of a possible realization of the bus interface of FIG 1; and
FIG 4 shows a time diagram of an example of signals in the interface of FIG 3.

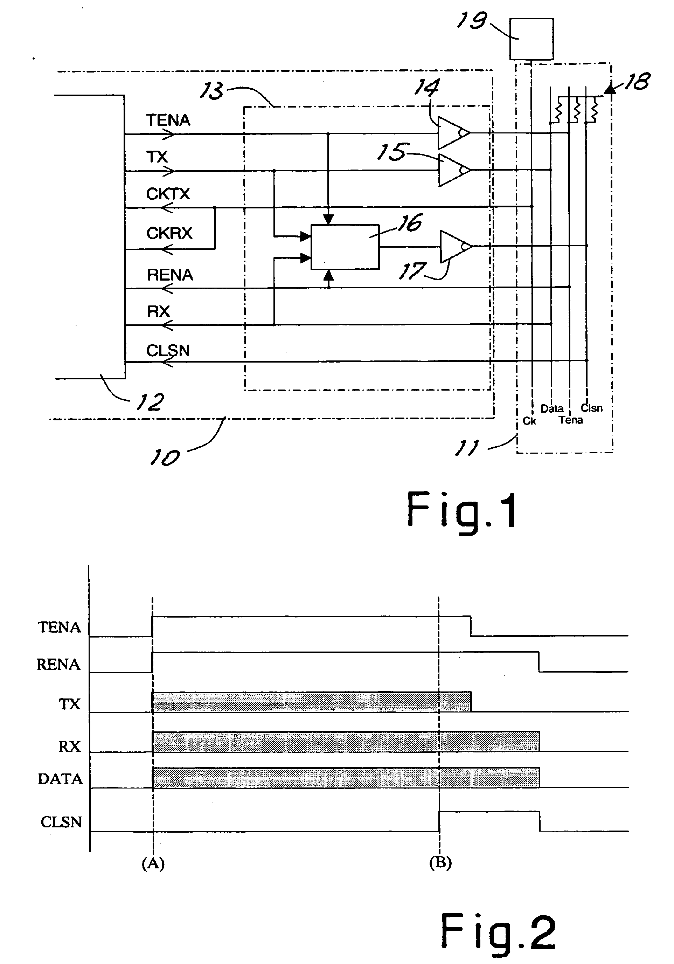

With reference to the figures, FIG 1 shows an interface and a connection bus between cards realized in accordance with the principles of the present invention.

A plurality of electronic cards 10 (only one is shown in the figure for the sake of simplicity) of a piece of electronic equipment (in particular a piece of telecommunications equipment) are interconnected through an internal connection bus 11. The cards are not described in detail here since they can be of any type as regards their functions in the equipment. Each card is equipped with a known MAC 12. The controller 12 has standard communication signals to and from the exterior. Said signals are indicated here by the initials usually employed for such known controllers, i.e. TENA (transmission enable), TX (data output), CKTX (transmission clock), CKRX (receiving clock), RENA (receiving enable), RX (data input) and CLSN (collision status on the bus).

In accordance with the present invention, while at the MAC level a high level of interoperability conforming to the standards of the IP protocol is maintained, the "physical" interface layer which implements the functions of transceiver and of the internal bus signal structure which interconnects the cards is realized through an innovative solution that abandons the known transceiver structure for interconnection of different equipment.

As may be seen in FIG 1, the proprietary bus solution described here allows full operation using only one CK clock bus (which can be with or without balanced transmission) and the DATA, TENA and CLSN signals (not balanced). An innovative interface 13 is inserted between the bus 11 with reduced lines and the standard outputs of the MAC 12. Essentially, the interface 13 comprises on each card an open-collector connection (by open collector ports 14, 15) between the TENA and TX lines of the MAC and the corresponding TENA and DATA lines of the bus and a collision detector 16 which when provided generates an appropriate collision signal on the CLSN line of the bus. The collision signal is also sent by the interface to the bus through an open collector port 17. For the DATA, TENA and CLSN lines of the bus there are provided appropriate pull-up resistances 18 arranged at some point along the bus (for example on a terminal card of the bus or on any connection card physically realizing the bus connections).

The CLSN input of the MAC is connected to the CLSN line of the bus, the RENA input of the MAC is connected to the TENA line of the bus, the RX input of the MAC is connected to the DATA line of the bus and the clock inputs CKTX and CKRX of the controller are both connected to the CK line of the bus. On the CK line of the bus there will be an appropriate master clock signal produced by a clock generator 19 (for example by a card with master functions). The clock signal will have appropriate frequency compatible with the clock specifications of the MACs used. A suitable clock generator is readily imaginable to those skilled in the art and therefore not shown in detail.

As clarified below, the collision detector receives at input the TX signal output from the MAC of the card and the RX signal received by the card and coming from the bus and compares them (synchronizing with the TENA and RENA signals). During a data transmission operation by the card 10, if the signal received by the card from the DATA line of the bus is not a replication of the signal transmitted it means that another card is transmitting simultaneously (the signals transmitted simultaneously on the DATA line are placed in cabled OR by the open collector lines). The collision detector detects this condition and signals the collision on the CLSN line of the bus. The collision is thus detected by the MAC through its own CSLN lines.

This solution greatly simplifies the circuit and brings advantages of easy integration on FPGA components (with low costs and no added LSI component), high speed, no constraint in the physical separation and much lower power consumption than required by the prior art. The open-collector connection functions of the transceiver can be realized by using a single transistor in open collector configuration with only one pull-up resistances 18 for each signal line and a minimum amount of circuitry well suited to integration in an FPGA component.

Consumption is reduced virtually to only that of the collision detection circuit 16 which, as clarified below, can be realized with a small number of simple components.

By way of example, assuming equipment with twenty internal cards that require being interconnected to the bus, with standard industrial components for interface with a standard bus the typical dissipation is approximately 20 W both static and dynamic. With the new solution in accordance with the present invention and realization of the same functions, static dissipation is only 2 W and dynamic dissipation only 300 mW.

FIG 2 shows a time diagram of the main bus signals and signals from and to the MAC. The moments indicated by (A) and (B) correspond respectively to the beginning of transmission of a first MAC and a second MAC. It is seen how the collision signal CLSN is declared as soon as the second MAC begins to transmit and causes collision on the bus. The bus protocol used becomes clear.

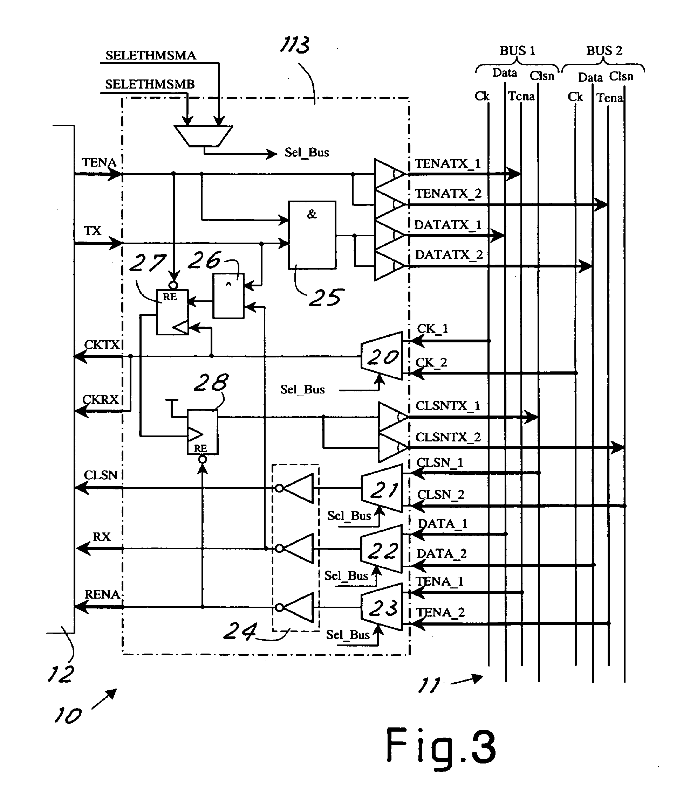

FIG 3 shows an implementation of an interface 113 in accordance with the present invention with the collision detector shown in greater detail. A possible realization with two buses in which two identical buses (busses 1 and 2) are selectable by the card depending on specific communication requirements is also shown. To perform the selection in the card, selection signals SELETHMSMA and

SELETHMSMB are produced and produce a Sel_bus signal for control of electronic switches 20 to 23 for the pairs of signals input from the two buses.

In the interface 113, the CLSN, RX and RENA signals are reversed by ports NOT 24. This is due to the fact that open collector transistors are used and to the particular implementation of the example.

As seen again in FIG 3, the TX signal is sent to the bus through a port and connected to the TENA signal with another input. In this manner the TX signal reaches the bus only if the TENA signal is at 1 (transmission enabled).

The collision detector is realized with a simple comparator realized with an XOR 26 port and two Flip/Flops 27, 28. The two inputs of the port XOR are connected to TX and RX. In this manner the output of the port will be 1 only if TX and

RX are different. The first F/F 27 memorizes this at the clock signal and produces in turn a clock signal for the second F/F 28 which thus emits a "1" on the CLSN line of the selected bus. The TENA and RENA signals are reset for the two F/Fs. The simplicity of the collision detector and its resulting low power consumption are obvious.

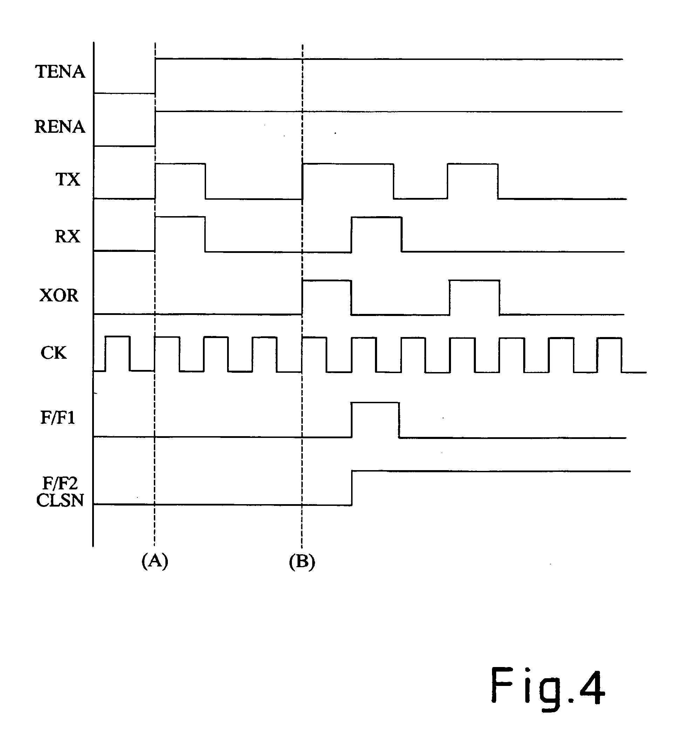

For greater clarity, the time diagram of the signals is shown by way of example in FIG 4. The moments designated (A) and (B) correspond respectively to the beginning of transmission of a first and a second MAC. It should be noted that the collision signal CLSN is declared synchronized with the rising front of the clock as soon as the second MAC begins to transmit and causes collision on the bus.

It is now clear that the predetermined purposes have been achieved by making available a bus interface device, a bus and a bus protocol allowing optimization of the performance of a connection system for internal cards to a piece of equipment also using a known MAC conforming to the standards of the IP protocol. The system in accordance with the present invention allows reducing to the minimum software modifications for processing of communications with IP protocol while greatly simplifying the hardware used.

Naturally the above description of an embodiment applying the innovative principles of the present invention is given by way of non-limiting example of said principles within the scope of the exclusive right claimed here. For example the MAC can comprise a single clock input CK 1 in place of the separate inputs CKTX and CKRX.

## Claims

1. Bus interface device for interconnection of a plurality of cards (10) in a piece of electronic equipment comprising, for each card, a Media Access Controller (12) with TENA, TX, CKTX, RENA, RX, CKRX and CLSN bus signals and a transceiver (13) between the Media Access Controller (12) and at least one interconnection bus (11) between the cards, **characterized in that** the interconnection bus (11) comprises a CK clock line, a data line, a TENA signaling line for signaling enablement for transmission by a card (10) connected to the bus (11), and a CLSN signaling line for signaling the collision event on the bus, with the transceiver (13) connecting the TENA line of the bus to the TENA and RENA lines of the Media Access Controller, the TX and RX lines of the Media Access Controller to the DATA line of the bus, the CKTX and CKRX lines of the Media Access Controller to the CK line of the bus and the CLSN line of the Media Access Controller to the CLSN line of the bus, with the TENA and TX lines of the Media Access Controller being connected to the bus (11) with an open-collector connection (14, 15), and the transceiver (13) comprising in addition a collision detector (16) which, when the TENA line of the Media Access Controller signals enablement of the card (10) for transmission, is adapted to compare the TX line output from the Media Access Controller and the RX line input to the Media Access Controller synchronizing with the TENA and RENA signals and to send out a collision signal on the CLSN line of the bus if the RX signal is not a replication of the TX signal.

2. Device in accordance with claim 1, **characterized in that** the connection of the collision detector output to the bus (11) is realized with an open-collector connection (17).

3. Device in accordance with claim 2, **characterized in that** the DATA, TENA and CLSN lines of the bus are terminated with a load resistor (18) for all the open-collector connections of the transceiver (13) to the bus (11).

4. Device in accordance with claim 1, **characterized in that** the comparisons of the collision detector (16) are synchronized with the bus clock.

5. Device in accordance with claim 1, **characterized in that** the transceiver (13) comprises an enablement port for the connection between the TX of the Media Access Controller and the DATA line of the bus (11), with control based on the state of the TENA line of the Media Access Controller.

6. Device in accordance with claim 1, **characterized in that** it is implemented at least partly with an FPGA inside the card.

7. Device in accordance with claim 6, **characterized in that** the at least partial implementation comprises the transceiver (13) with the collision detector (16).

8. Device in accordance with claim 1, **characterized in that** the busses are at least two in number and the transceiver (13) comprises controlled means of selection of the connection to one bus or the other.

9. Bus for interconnection of a plurality of cards (10) inside a piece of electronic equipment and adapted to communicate with a bus interface device according to claims 1 to 8, comprising a CK clock line, a data line, a TENA signaling line for signaling enablement for transmission by a card (10) connected to the bus (11), and a CLSN signaling line for signaling the collision event on the bus, wherein the said clock line, data line, TENA and CLSN signaling lines are adapted to convey media access control signals, with the TENA CLSN and DATA lines being terminated with a load resistor (18) for supplying an open-collector connection (14, 15) of corresponding outputs of the cards connected to the bus (11).

10. Interconnection bus protocol of a plurality of cards (10) within a piece of electronic equipment, starting from TENA, TX, CKTX, RENA, RX CKRX and CLSN signals of a Media Access Controller (12) on each card (10), comprising a CK clock signal connected to the CKTX and CKRX signals of the Media Access Controller, a data signal connected to the TX and RX signals of the Media Access Controller and a TENA signal connected to the TENA and RENA signals of the Media Access Controller to signal transmission enablement of a card (10) connected to the bus (11), and a CLSN signal for signaling the collision event on the bus, with the DATA, TENA and CLSN signals being sent on the bus with an open-collector connection, and there being provided a collision detection (16) which declares a CLSN signal on the bus when discordance is detected between the data sent by a card (10) on the data line of the bus and the data which the same card receives simultaneously from the bus on the same data line of the bus.

11. Piece of electronic equipment made up of a plurality of cards (10) interconnected by an internal bus (11), with each card comprising a Media Access Controller (12) and an interfacing transceiver (13) of the Media Access Controller to the bus by means of a bus interface device for interconnection between the cards (10) according to claim 1.

12. Equipment in accordance with claim 11, **characterized in that** the output connection of the collision detector (16) to the bus (11) is realized with an open-collector connection (17).

13. Equipment in accordance with claim 12, **characterized in that** the DATA, TENA and CLSN lines of the bus are terminated with a load resistor (18) for all the open-collector connections of the transceiver (13) to the bus (11).

## Patentansprüche

1. Busschnittstellenvorrichtung für die Kopplung einer Mehrzahl von Karten (10) in einem Stück elektronischer Ausrüstung, umfassend - für jede Karte - einen Media Access Controller (12) mit TENA-, TX-, CKTX-, RENA-, RX-, CKRX- und CLSN-Bussignalen und einen Sender-Empfänger (13) zwischen dem Media Access Controller (12) und mindestens einem Verbindungsbus (11) zwischen den Karten, **dadurch gekennzeichnet, dass** der Verbindungsbus (11) eine CK-Taktleitung, eine Datenleitung, eine TENA-Signalleitung zum Signalisieren der Freigabe zur Übertragung durch eine am Bus (11) angeschlossene Karte (10) und eine CLSN-Signalleitung zum Signalisieren des Kollisionsereignisses am Bus umfasst, wobei der Sender-Empfänger (13) die TENA-Leitung des Busses mit der TENA-und der RENA-Leitung des Media Access Controllers, die TX- und die RX-Leitung des Media Access Controllers mit der DATA-Leitung des Busses, die CKTX- und die CKRX-Leitung des Media Access Controllers mit der CK-Leitung des Busses und die CLSN-Leitung des Media Access Controllers mit der CLSN-Leitung des Busses verbindet, wobei die TENA- und die TX-Leitung des Media Access Controllers mit einer Open-Collector-Verbindung (14, 15) am Bus (11) angeschlossen ist und der Sender-Empfänger (13) zusätzlich einen Kollisionsdetektor (16) umfasst, welcher, wenn die TENA-Leitung des Media Access Controllers die Freigabe der Karte (10) zur Übertragung signalisiert, dazu angepasst ist, den TX-Leitungsausgang aus dem Media Access Controller und den RX-Leitungseingang in den Media Access Controller zu vergleichen, wobei mit dem TENA- und dem RENA-Signal synchronisiert wird, und ein Kollisionssignal auf der CLSN-Leitung des Busses auszusenden, wenn das RX-Signal keine Replikation des TX-Signals ist.

2. Vorrichtung gemäß Anspruch 1, **dadurch gekennzeichnet, dass** die Verbindung des Kollisionsdetektorausgangs mit dem Bus (11) mit einer Open-Collector-Verbindung (17) realisiert ist.

3. Vorrichtung gemäß Anspruch 2, **dadurch gekennzeichnet, dass** die DATA-, die TENA- und die CLSN-Leitung des Busses mit einem Lastwiderstand (18) für alle Open-Collector-Verbindungen des Sender-Empfängers (13) zum Bus (11) abgeschlossen sind.

4. Vorrichtung gemäß Anspruch 1, **dadurch gekennzeichnet, dass** die Vergleiche des Kollisionsdetektors (16) mit dem Bus-Taktgeber synchronisiert werden.

5. Vorrichtung gemäß Anspruch 1, **dadurch gekennzeichnet, dass** der Sender-Empfänger (13) einen Freigabeport für die Verbindung zwischen der TX des Media Access Controllers und der DATA-Leitung des Busses (11) umfasst, wobei die Steuerung auf dem Zustand der TENA-Leitung des Media Access Controllers beruht.

6. Vorrichtung gemäß Anspruch 1, **dadurch gekennzeichnet, dass** sie zumindest teilweise mit einem FPGA im Inneren der Karte ausgeführt ist.

7. Vorrichtung gemäß Anspruch 6, **dadurch gekennzeichnet, dass** die zumindest teilweise Implementierung den Sender-Empfänger (13) mit dem Kollisionsdetektor (16) umfasst.

8. Vorrichtung gemäß Anspruch 1, **dadurch gekennzeichnet, dass** es mindestens zwei Busse gibt und der Sender-Empfänger (13) gesteuerte Mittel zum Auswählen der Verbindung zu dem einen oder anderen Bus umfasst.

9. Bus zur Kopplung einer Mehrzahl von Karten (10) im Inneren eines Stücks elektronischer Ausrüstung, welche dazu angepasst sind, mit einer Busschnittstellenvorrichtung gemäß den Ansprüchen 1 bis 8 zu kommunizieren, umfassend eine CK-Taktleitung, eine Datenleitung, eine TENA-Signalleitung zum Signalisieren der Freigabe zur Übertragung durch eine am Bus (11) angeschlossene Karte (10) und eine CLSN-Signalleitung zum Signalisieren des Kollisionsereignisses am Bus, wobei die Taktleitung, die Datenleitung, die TENA- und die CLSN-Signalleitung dazu angepasst sind, Media-Access-Steuersignale zu übermitteln, wobei die TENA-, die CLSN- und die DATA-Leitung mit einem Lastwiderstand (18) zum Versorgen einer Open-Collector-Verbindung (14, 15) von entsprechenden Ausgängen der am Bus (11) angeschlossenen Karten abgeschlossen sind.

10. Verbindungsbusprotokoll einer Mehrzahl von Karten (10) innerhalb eines Stücks elektronischer Ausrüstung, ausgehend von TENA-, TX-, CKTX-, RENA-, RX-, CKRX- und CLSN-Signalen eines Media Access Controllers (12) an jeder Karte (10), umfassend ein mit dem CKTX- und dem CKRX-Signal des Media Access Controllers verbundenes CK-Taktsignal, ein mit dem TX- und dem RX-Signal des Media Access Controllers verbundenes Datensignal und ein mit dem TENA- und dem RENA-Signal des Media Access Controllers verbundenes TENA-Signal zum Signalisieren der Übertragungsfreigabe einer am Bus (11) angeschlossenen Karte (10) und ein CLSN-Signal zum Signalisieren des Kollisionsereignisses am Bus, wobei das DATA-, das TENA- und das CLSN-Signal am Bus mit einer Open-Collector-Verbindung versendet werden und eine Kollisionsdetektion (16) vorgesehen ist, welche ein CLSN-Signal am Bus angibt, wenn eine Diskrepanz zwischen den von einer Karte (10) auf der Datenleitung des Busses gesendeten Daten und den Daten, welche dieselbe Karte gleichzeitig vom Bus auf derselben Datenleitung des Busses empfängt, festgestellt wird.

11. Stück elektronischer Ausrüstung, das aus einer Mehrzahl von durch einen internen Bus (11) gekoppelten Karten (10) aufgebaut ist, wobei jede Karte einen Media Access Controller (12) und einen eine Schnittstelle bildenden Sender-Empfänger (13) des Media Access Controllers zum Bus mittels einer Busschnittstellenvorrichtung zur Kopplung zwischen den Karten (10) gemäß Anspruch 1 umfasst.

12. Ausrüstung gemäß Anspruch 11, **dadurch gekennzeichnet, dass** die Ausgangsverbindung des Kollisionsdetektors (16) zum Bus (11) mit einer Open-Collector-Verbindung (17) realisiert ist.

13. Ausrüstung gemäß Anspruch 12, **dadurch gekennzeichnet, dass** die DATA-, die TENA- und die CLSN-Leitung des Busses mit einem Lastwiderstand (18) für alle Open-Collector-Verbindungen des Sender-Empfängers (13) zum Bus (11) abgeschlossen sind.

## Revendications

1. Dispositif d'interface de bus pour interconnexion d'une pluralité de cartes (10) dans un élément d'équipement électronique comprenant, pour chaque carte, un contrôleur d'accès au support (MAC) (12) avec des signaux de bus TENA, TX, CKTX, RENA, RX, CKRX et CLSN et un émetteur-récepteur (13) entre le contrôleur d'accès au support (12) et au moins un bus d'interconnexion (11) entre les cartes, **caractérisé en ce que** le bus d'interconnexion (11) comprend une ligne d'horloge CK, une ligne de données, une ligne de signalisation TENA pour signaler la permission de transmission par une carte (10) connectée au bus (11), et une ligne de signalisation CLSN pour signaler l'événement de collision sur le bus, avec l'émetteur-récepteur (13) connectant la ligne TENA du bus aux lignes TENA et RENA du contrôleur d'accès au support, les lignes TX et RX du contrôleur d'accès au support à la ligne DATA du bus, les lignes CKTX et CKRX du contrôleur d'accès au support à la ligne CK du bus et la ligne CLSN du contrôleur d'accès au support à la ligne CLSN du bus, avec les lignes TENA et TX du contrôleur d'accès au support étant connectées au bus (11) avec une connexion à collecteur ouvert (14, 15), et l'émetteur-récepteur (13) comprenant en outre un détecteur de collision (16) qui, lorsque la ligne TENA du contrôleur d'accès au support signale la permission de la carte (10) pour une transmission, est adapté pour comparer la sortie de la ligne TX du contrôleur d'accès au support et l'entrée de la ligne RX au contrôleur d'accès au support en synchronisation avec les signaux TENA et RENA, et pour délivrer en sortie un signal de collision sur la ligne CLSN du bus si le signal RX n'est pas une copie du signal TX.

2. Dispositif selon la revendication 1, **caractérisé en ce que** la connexion de la sortie du détecteur de collision vers le bus (11) est réalisée avec une connexion à collecteur ouvert (17).

3. Dispositif selon la revendication 2, **caractérisé en ce que** les lignes DATA, TENA et CLSN du bus sont terminées par une résistance de charge (18) pour toutes les connexions à collecteur ouvert de l'émetteur-récepteur (13) vers le bus (11).

4. Dispositif selon la revendication 1, **caractérisé en ce que** les comparaisons du détecteur de collision (16) sont synchronisées avec l'horloge du bus.

5. Dispositif selon la revendication 1, **caractérisé en ce que** l'émetteur-récepteur (13) comprend un port de validation pour la connexion entre la ligne TX du contrôleur d'accès au support et la ligne DATA du bus (11), avec un contrôle basé sur l'état de la ligne TENA du contrôleur d'accès au support.

6. Dispositif selon la revendication 1, **caractérisé en ce qu'**il est implémenté au moins partiellement avec un FPGA à l'intérieur de la carte.

7. Dispositif selon la revendication 6, **caractérisé en ce que** l'implémentation au moins partielle comprend l'émetteur-récepteur (13) avec le détecteur de collision (16).

8. Dispositif selon la revendication 1, **caractérisé en ce que** les bus sont au moins au nombre de deux et **en ce que** l'émetteur-récepteur (13) comprend des moyens contrôlés de sélection de la connexion vers un bus ou vers l'autre.

9. Bus pour l'interconnexion d'une pluralité de cartes (10) à l'intérieur d'un élément d'équipement électronique et adapté pour communiquer avec un dispositif d'interface de bus selon les revendications 1 à 8, comprenant une ligne d'horloge CK, une ligne de données, une ligne de signalisation TENA pour signaler la permission de transmission par une carte (10) connectée au bus (11), et une ligne de signalisation CLSN pour signaler l'événement de collision sur le bus, où ladite ligne d'horloge, ladite ligne de données, lesdites lignes de signalisation TENA et CLSN sont adaptées pour acheminer des signaux de contrôle d'accès au support, avec les lignes TENA, CLSN et DATA étant terminées par une résistance de charge (18) pour alimenter une connexion à collecteur ouvert (14, 15) aux sorties correspondant à celles des cartes connectées au bus (11).

10. Protocole de bus d'interconnexion d'une pluralité de cartes (10) à l'intérieur d'un élément d'équipement électronique, commençant par les signaux TENA, TX, CKTX, RENA, RX, CKRX et CLSN d'un contrôleur d'accès au support (12) sur chaque carte (10), comprenant un signal d'horloge CK connecté aux signaux CKTX et CKRX du contrôleur d'accès au support, un signal de données connecté aux signaux TX et RX du contrôleur d'accès au support et un signal TENA connecté aux signaux TENA et RENA du contrôleur d'accès au support pour la permission de transmission du signal d'une carte (10) connectée au bus (11), et un signal CLSN pour signaler l'évènement de collision sur le bus, avec les signaux DATA, TENA et CLSN étant transmis sur le bus avec une connexion à collecteur ouvert, et il est pourvu une détection de collision (16) qui déclare un signal CLSN sur le bus lorsqu'une discordance est détectée entre les données transmises par une carte (10) sur la ligne de données du bus et les données que la même carte reçoit simultanément du bus sur la même ligne de données du bus.

11. Elément d'équipement électronique constitué d'une pluralité de cartes (10) interconnectées par un bus interne (11), avec chaque carte comprenant un contrôleur d'accès au support (12) et un émetteur-récepteur d'interface (13) du contrôleur d'accès au support vers le bus au moyen d'un dispositif d'interface de bus pour l'interconnexion entre les cartes (10) selon la revendication 1.

12. Equipement selon la revendication 11, **caractérisé en ce que** la connexion de sortie du détecteur de collision (16) vers le bus (11) est réalisée à l'aide d'une connexion à collecteur ouvert (17).

13. Equipement selon la revendication 12, **caractérisé en ce que** les lignes DATA, TENA et CLSN du bus sont terminées par une résistance de charge (18) pour toutes les connexions à collecteur ouvert de l'émetteur-récepteur (13) vers le bus (11).
